# EUROPÄISCHE PATENTSCHRIFT

(11) **EP 2 377 820 B1**
(45) Veröffentlichungstag und Bekanntmachung des Hinweises auf die Patenterteilung: **18.09.2013**
(21) Anmeldenummer: 11162512.5
(22) Anmeldetag: 14.04.2011
(51) Int. Cl.: C02F 9/00

(54) **Reinigungseinheit zum Aufbereiten von Wasser**
Cleaning unit for water treatment
Unité de nettoyage pour la préparation d'eau

(30) Priorität: 15.04.2010 DE 102010015089
(43) Veröffentlichungstag der Anmeldung: 19.10.2011
(73) Patentinhaber: Sigmund Lindner GmbH, 95485 Warmensteinach (DE)
(72) Erfinder: Wistuba, Eberhard, 89364 Rettenbach (DE); Zink, Michael, 89331 Burgau (DE)
(74) Vertreter: Hagemann, Heinrich

(56) Entgegenhaltungen:
- DE-A1- 2 707 471
- DE-A1- 10 352 460
- GB-A- 2 386 117

## Beschreibung

Die Erfindung betrifft eine Reinigungseinheit zum Aufbereiten von Wasser, insbesondere von industriellen Brauch- und Abwässern, Trinkwasser und Schwimmbeckenwasser, wobei diese Reinigungseinheit insbesondere in ein zyklisches Reinigungssystem integriert ist.

Wasser, in das durch verschiedene Prozesse fortlaufend Bakterien und andere unerwünschte Stoffe gelangen, muss, um die Reinheitsanforderungen zu erfüllen, stets gereinigt werden. Beispielsweise sind aus Anlagen zur Reinigung von Wasser eines Schwimmbads Filtersysteme bekannt, bei denen das Wasser zuerst einen Filter, der Kohle, Kies, Sand oder Ähnliches als Filtermaterial enthält, durchläuft. Vor dem Durchlaufen des ersten Filters wird das Wasser mit einem Flockungsmittel versetzt, damit Schmutzteile agglomerieren. Nach Durchlaufen des ersten Filters kann das Wasser einen Aktivkohlefilter durchlaufen, um gebundenes Chlor aus dem Wasser zu entfernen.

Beispielsweise wird in Schwimmbädern üblicherweise das abgebadete Wasser über die Überlaufrinne geführt und dem Schwallwasserbehälter zugeleitet. Darüber hinaus fließt in diesen oder die Schwallwasserbehälter (es können pro Becken mehr Behälter sein) Frischwasser oder wird an anderer Stelle in das System eingespeist. Dieses Wasser kann entweder dem zentralen Trinkwasserversorgungsnetz entnommen werden oder aus einem Brunnen stammen. Das zugeführte Frischwasser ist, je nach Herkunft, in seiner Qualität oft stark unterschiedlich. Dies betrifft insbesondere den Bakteriengehalt bzw. den Gehalt an organischen Stoffen, der im Allgemeinen nach dem Kaliumpermanganat-Index (DIN 38409-05) bestimmt wird. Die Mindestzufuhr an Frischwasser beträgt nach den normativen Verweisungen (DIN 19643) 30 Liter pro Badegang. Bedingt durch den unterschiedlichen Kaliumpermanganat-Index ist davon auszugehen, dass die Frachten, bezogen auf den Badegang, von Ort zu Ort unter-schiedlich sind. Beispielsweise beträgt der Kaliumpermanganat-Index des zugeführten Frischwassers in einer Stadt im Ruhrgebiet 3 mg/l und in einer mitteldeutschen Stadt 10 mg/l. Daraus resultieren unterschiedliche Frachten pro Badegang (90 mg pro Badegast einerseits und 300 mg pro Badegast andererseits). Dieses Wassergemisch wird bei bekannten Anlagen über eine Umwälzpumpe auf die nachgeschaltete Filteranlage geführt. Zwischengeschaltet wird zwischen Schwallwasserbehälter und Filteranlage eine Flockungseinheit. Durch die Flockungseinheit (Dosiereinheit) wird dem Volumenförderstrom ein Flockungsmittel, in der Regel auf Aluminiumbasis, vorzugsweise kontinuierlich zugeführt.

Das Flockungsmittel bewirkt, dass die Trübstoffe koagulieren und damit größere Teilchen bilden. Diese werden auf dem nachfolgend geschalteten Filterbett abgeschieden. Die in dem Filterbett abgelagerten Trübstoffe und ausgeflockte kolloidale Substanzen werden durch den in periodischen Abständen durchzuführenden Spülvorgang (Gegenstrom) ausgetragen. Bedingt durch technische Merkmale der Filteranlage bleiben nach Abschluss des Spülvorgangs regelmäßig Rückstände im Filter, die Anlass zu Verkeimungen geben und zur Agglomeration von Schadstoffen führen. Dies mindert im Verlaufe der Zeit in hohem Maße die Filterleistung. (Filterstromrichtung von oben nach unten / Spülen von unten nach oben). Die lineare Filtriergeschwindigkeit beträgt in der Regel bei Filtern mit geschlossener Bauweise bis zu 30 m/Stunde. Der Spülvorgang soll gemäß DIN 19643 mit einer linearen Spülgeschwindigkeit zwischen 60 m/Stunde und 65 m/Stunde (unabhängig vom Filtermaterial) durchgeführt werden.

Davon ausgehend, dass dem Betreiber des Schwimmbades lediglich eine Umwälzpumpe zur Verfügung steht, die ausschließlich eine lineare Filtriergeschwindigkeit von 30 m/Stunde erlaubt, ist es kaum möglich, durch die Umkehr der Fließrichtung den jeweiligen Spülvorgang ordnungsgemäß durchzuführen. Es hat sich gezeigt, dass die Spüldauer zwar eine wichtige Bezugsgröße darstellt, jedoch in der Praxis keinen Einfluss auf die Ausdehnung des Filterbettes und somit den Austrag an Verschmutzung mikrobieller und chemischer Art hat. Zum Filtermaterial bei vorbekannten Anlagen ist folgendes auszuführen: Es handelt sich hierbei z.B. um Sand, Anthrazit, Bims, Braunkohlekoks, Pech- oder Petrolkoks. Da es sich hier um Filtermaterialien organischer Herkunft, mit der Ausnahme von Sand, handelt, ist davon auszugehen, dass bestimmte Komponenten des Materials mit Chlor unter Bildung halogenierter Kohlenwasserstoffe, insbesondere Trihalogenmethan, sowie halogenierter Organosäuren, insbesondere von Mono-, Di- und Trichloressigsäure, reagieren.

Für das in den Filter im normalen Prozess gelangte Chlor gibt es zwei Ursachen für die Bildung von unerwünschten halogenierten organischen Verbindungen: Die auf den Badegast zurückgehenden Verschmutzungen bilden mit dem vorhandenen Chlor sowohl die Trihalogenmethane als auch Chloramine. Bedingt durch den Gehalt an Restchlor läuft die vorstehend bezeichnete Reaktion im Filter vorbekannter Anlagen ab. Hierbei handelt es sich demzufolge nicht um Verschmutzungen, die auf den Badegast zurückgehen, sondern die allein durch die organischen Komponenten des jeweiligen Filtermaterials hervorgerufen werden.

Durch den aufgezeigten mangelhaften Spülvorgang bei vorbekannten Anlagen bilden sich im jeweiligen Filterbett Agglomerate, so dass eine Reinhaltung des Filterbettes nach einer gewissen Zeit unmöglich wird. Die Folge ist ein aufwendiger und vollständiger Austausch des gesamten Filterbettes. Es gibt keine normativen Verweisungen, nach welcher Zeit das Filtermaterial ausgetauscht werden muss. Eine schlechte Filterleistung führt zwangsläufig dazu, dass der Kaliumpermanganat-Index in Bereiche ansteigt, die als Gesundheitsrisiko einzustufen sind. Der Kaliumpermanganat-Index im Beckenwasser darf nicht höher sein als 3 mg/l über den Wert des Füll- bzw. Frischwassers. Eine entsprechende Laboruntersuchung erfolgt in der Regel monatlich. Wird dieser Wert überschritten, dann wird verschiedenen möglichen Ursachen nachgegangen, beispielsweise mangelhafte Füllwasserzugabe, unzulängliche Eindosung von Reinigungs- und Desinfektionsmitteln, bezogen auf den Beckenumgang. Das Filterbett bzw. das Filtermaterial wird bei diesen Nachforschungen außer Betracht gelassen. Demzufolge ergeben sich vielfältige Probleme, wie große Gefahr der mikrobiellen Verschmutzung bei Nennbelastung (höchstzulässige Belastung nach DIN 19643) bzw. Überbelastung. Es sind Fälle bekannt, wonach sich auch bei geringen Belastungen durch die vorhandenen Verfahrenstechniken eine hohe mikrobielle Verschmutzung des Beckenwassers einstellt.

Im Übrigen gilt im Rahmen einer von der europäischen Kommission verfassten Trinkwasserverordnung ein neuer Grenzwert für den Gehalt an Trihalogenmethan (THM) im

Füllwasser. Dieser wurde von 10 µg/l auf 50 µg/l angehoben (Dimension entspricht der Trinkwasserverordnung). Das Füllwasser dient dem Füllen bzw. Nachfüllen von Umwälzkreisläufen in öffentlichen Bäderanlagen bzw. Gewerbebetrieben (Hotels etc.). Bei dem niedrigen Gehalt an THM von weniger als 10 µg/l war es aufgrund der vorbekannten Filtersysteme möglich, den höchstzulässigen THM-Wert im Beckenwasser von 20 µg/l einzuhalten. Das Heraufsetzen des Grenzwerts für den Gehalt an Trihalogenmethan im Füllwasser auf den Höchstwert von 50 µg/l löst folgende Probleme aus: Bei den vorbekannten Systemen war es möglich, den angesprochenen Höchstwert im Beckenwasser einzuhalten, was auch durch die Badegäste beeinflusst wird. Der nun festgesetzte Höchstwert führt dazu, dass bei den bisher angewandten Filtermethoden bzw. Verfahrensmethoden der Höchstwert von 20 µg/l in vielen Fällen weit überschritten wird. Hierfür hat es bis heute noch keine technische Lösung gegeben.

Die DE 27 07 471 offenbart eine Reinigungseinrichtung zum Aufbereiten von Wasser mit zwei Reinigungseinrichtungen in Form einer Aktivkohlefilter-Reinigungseinrichtung und einer Quarzkiesfilter-Reinigungseinrichtung, die miteinander in Fluidverbindung stehen. Während die eine Reinigungseinrichtung Aktivkohle als teilchenförmigen adsorbierenden Reinigungsstoff verwendet, enthält das teilchenförmige Reinigungsmaterial der weiteren Reinigungseinrichtung Quarzkies.

Eine entsprechende Reinigungseinrichtung wird in der GB 2 386 117 A beschrieben, wobei das teilchenförmige Reinigungsmaterial der weiteren Reinigungseinrichtung Sand statt Quarzkies enthält.

In der DE 103 52 460 A1 wird ein Mittel zur Absorption von Trihalogenmethanen und AOX sowie zur Reduzierung von Chloraminen aus Wasser beschrieben, das Einzelstoffe oder Gemische von Pulveraktivkohle und/oder andere adsorbierende Stoffe enthält.

Der Erfindung liegt die Aufgabe zu Grunde, die bekannten Reinigungseinheiten zum Aufbereiten von Wasser, insbesondere von industriellen Brauch- und Abwässern, Trinkwasser und Schwimmbeckenwasser, so weiterzubilden, dass die Einhaltung der mikrobiologischen und physikalisch-chemischen Anforderungen an das gereinigte Wasser technisch einfacher und wirkungsvoller erfolgt. Dies soll insbesondere gelten, wenn die Reinigungseinheit in ein zyklisches Reinigungssystem integriert ist.

Erfindungsgemäß wird die obige Aufgabe durch eine Reinigungseinheit zum Aufbereiten von Wasser mit den Merkmalen des Anspruchs 1 gelöst. Sie dient insbesondere zum Aufbereiten von industriellen Brauch- und Abwässern, Trinkwasser und Schwimmbeckenwasser, wobei die Reinigungseinheit wenigstens zwei Reinigungseinrichtungen (A, B) aufweist, die miteinander über eine Verbindungsleitung fluidverbunden sind, wobei eine Reinigungseinrichtung (A) einen teilchenförmigen adsorbierenden Reinigungsstoff einer Mindest-BET-Oberfläche von 100 m²/g, insbesondere 300 m²/g, zum Entfernen organischer Stoffe, insbesondere von halogenierten Kohlenwasserstoffen und von Aminen, und eine weitere Reinigungseinrichtung (B) ein chemisch, insbesondere gegenüber Desinfektionsmitteln inertes teilchenförmiges Reinigungsmaterial zum Entfernen von Trübstoffen enthält. Die Reinigungseinrichtung zeichnet sich dadurch aus, dass die Teilchen des Reinigungsmaterials der Reinigungseinrichtung (B) kugelförmig sind und eine glatte Oberfläche mit einer Rauheit (Ra) unter 1 µm aufweisen.

Im Lichte des vorstehend geschilderten Standes der Technik liegt demzufolge der Kerngedanke vorliegender Erfindung darin, zur Aufbereitung des jeweiligen Wassers die "*adsorbierende Reinigungsstufe*" und die rein "*physikalisch-filtrierende Reinigungsstufe*" zu trennen und dabei die weiteren erfindungsrelevanten Merkmale, wie oben dargestellt, zu berücksichtigen, nämlich die Besonderheiten der Reinigungseinheiten (A) und (B) bzw. der hierbei zu beachtenden Besonderheiten des adsorbierenden Reinigungsstoffs bzw. des inerten teilchenförmigen Reinigungsmaterials.

Zum teilchenförmigen adsorbierenden Reinigungsstoff einer Mindest-BET-Oberfläche von 100 m²/g, insbesondere von 300 m²/g zum Entfernen der organischen Stoffe, insbesondere von halogenierten Kohlenwasserstoffen und von Aminen: Zunächst kann es sich hierbei um einen einzelnen Reinigungsstoff bzw. auch um ein Gemisch verschiedener Reinigungsstoffe handeln. Dabei wird es bevorzugt, dass die maximale BET-Oberfläche von 1800 m²/g, insbesondere von 1200 m²/g und ganz besonders von 1000 m²/g eingehalten wird. Als besonders bevorzugte Rahmenbedingung kann der Bereich von etwa 750 bis 1200 m²/g angegeben werden. Durch die Einhaltung dieser bevorzugten Rahmenbedingungen wird sichergestellt, dass das Wasser die Reinigungseinheit (A) mit einem optimierten Strömungswiderstand durchströmt. Um die erfindungsgemäße Reinigungseinheit (A) erfolgreich einzusetzen, ist der Reinigungsstoff der Reinigungseinheit (A) zweckmäßigerweise abriebfest. Dabei beträgt die Abriebzahl nach der (AWWA)-Methode (American Water Works Association) etwa 50 bis 98, insbesondere von 60 bis 95. Vorteilhafterweise wird dabei eine Kugelhärte nach DIN(EN) 12915 von etwa 50 bis 100%, insbesondere von etwa 70 bis 99%, eingehalten. Hier besteht ein Zusammenhang: Je härter der Reinigungsstoff ist, um so abriebfester ist er. Durch die Einhaltung der wünschenswerten Abriebfestigkeit wird weitgehend sichergestellt, dass kein wesentlicher Teil des Reinigungsstoffs auf der Reinigungseinrichtung (A) in den Wasserkreislauf gelangt. Damit wird eine Verunreinigung des Wassers durch den Reinigungsstoff weitgehend ausgeschlossen.

Bei der Wahl des Reinigungsstoffs unter Berücksichtigung der oben angesprochenen Anforderungen unterliegt der Fachmann keinen wesentlichen Einschränkungen. Dabei kann es sich insbesondere um einen Reinigungsstoff bzw. ein Reinigungsstoffgemisch handeln auf Basis von Steinkohle, Torf, Lignin, Aktivkohle, gekörnt oder granuliert, Diathomeenerde (Kieselgur), Perliten, Zellstoff und Zeolithen. Auch die Verwendung von Reinigungsstoffen mit spezifischen filterhydraulischen Eigenschaften mit oder ohne Säuren ist möglich. Ebenfalls vorstellbar ist die Verwendung von Filterhilfsmitteln. Bevorzugt als Reinigungsstoff ist Aktivkohle, die besonders verbreitet und kostengünstig ist.

Das in der angesprochenen Reinigungseinheit (B) enthaltene Reinigungsmaterial zum Entfernen von Trübstoffen liegt teilchenmäßig vor und soll insbesondere innerhalb der Wasseraufbereitungssysteme chemisch inert sein, insbesondere gegenüber herangezogenen Desinfektionsmitteln. Es ist von Vorteil, wenn das teilchenförmige Reinigungsmaterial in einer einheitlichen geometrischen Form vorliegt. Von besonderem Vorteil ist es, wenn das teilchenförmige Reinigungsmaterial gemäß der Erfindung kugelförmig vorliegt, insbesondere in Form von Glaskugeln, die insbesondere auf der Basis von anorganischem Glas, insbesondere Silikatglas, beruhen. In Frage kommende alternative Materialien sind insbesondere Keramikmaterialien, aber auch Polymere einer Dichte von mehr als 1 kg/l. Es kommen aber auch beliebige andere Materialien in Betracht, sofern sie in den Kern der Erfindung fallen, wie er vorstehend und nachfolgend dargestellt wird, zum Beispiel Gesteinsmehl, zermahlene Carbonfasern, Stahlkugeln und Kohleabrieb, zu der gewünschten Kugelform gebunden mit Binder oder Bindemittel, wie Polysterharz und Härter. Selbstverständlich können auch Mischungen geeigneter Materialien herangezogen werden. Auf diese Weise wird die Permeabilität des Reinigungsmaterials erhöht und somit der spezifische Strömungswiderstand erniedrigt. Bei kugelförmigen Teilchen wird der Strömungswiderstand besonders erniedrigt. Hierbei kann die Korngröße des eingesetzten Reinigungsmaterials erniedrigt werden. Dies führt dazu, dass bei mindestens gleicher Filtrationsleistung die Spülgeschwindigkeit zur Reinigung gegenüber nicht kugelförmigem Reinigungsmaterial wesentlich geringer ist. Zweckmäßigerweise besteht das Reinigungsmaterial aus einem anorganischem Glas. Unabhängig von der chemischen Art des inerten teilchenförmigen Reinigungsmaterials ist es von besonderem Vorteil, wenn die Teilchen eine glatte Oberfläche aufweisen. Zur Glätte- bzw. Rauheitsmessung wird das Rauhheitsmessgerät T1000 und ein Gleitkufentaster TKK 50/70 mit einer Taststpitze (2 µm, 90°) der Firma Hommel-Etamic GmbH (Sparte industrielle Messtechnik des Jenoptik Konzerns) herangezogen. Die Bestimmung der Rauheitskenngrößen erfolgt durch die Abtastung der Oberflächenspur durch linare Vorschubbewegung einer Tastspitze. Durch die Erfassung der Auslenkung der Tastspitze kann das Profil der Oberfläche zweidimensional erfasst werden. Mittels Gauss-Filter laut DIN ISO 11562 erhält man das Welligkeits- und Rauheitsprofil der Oberfläche. Entsprechend DIN ISO 4287 können die Kenngrößen der Rauheit Ra berechnet werden. Diesbezüglich sei auch auf die Broschüre der Jenoptik "Hommel-Etamic T100, Mobiles Messen von Rauheit, Welligkeiten und Profilen" verwiesen, (veröffentlicht unter Nummer 10037191 vom 02/2009).

Bei den erfindungsgemäß verwendeten Kugeln, insbesondere Glaskugeln, liegt die Rauhheit Ra unter 1 µm. Ein Wert von Ra < 0,2 µm, insbesondere von Ra < 0,1 µm ist von besonderem Wert.

Eine glatte Oberfläche des Reinigungsmaterials führt dazu, dass darin abgelagerte bzw. angelagerte Stoffe durch Rückspülung einfacher als beispielweise aus herkömmlichem Filtermaterial, wie Quarzsand bzw. Kies mit rauer Oberfläche, entfernt werden können. Zudem wird dadurch der Strömungswiderstand in der Reinigungseinrichtung wünschenswert erniedrigt.

Wie bereits vorstehend ausgeführt, besteht das inerte teilchenförmige Reinigungsmaterial aus Glaskugeln, die insbesondere eine einheitliche Größe aufweisen. Der inerte

Charakter des Reinigungsmaterials, insbesondere auf der Basis von Siliziumdioxid, führt dazu, dass die Beschaffenheit des Wassers dadurch nicht beeinträchtigt wird.

Die Glaskugeln weisen bevorzugt folgende chemische Zusammensetzung (Gewichtsprozent) auf: SiO₂ 72,50 %, Na₂O 13,00 %, CaO 9,06 %, MgO 4,22 %, Al₂O₃ 0,58 %. Die Eigenschaften der Glaskugeln sind zweckmäßigerweise des Weiteren die folgenden: Hydrolytische Klasse HGB 2 (DIN ISO 719), Säureklasse S 2 (DIN 12116), Laugenklasse A 2 (DIN 695), spezifisches Gewicht 2,50 kg/l (DIN ISO 787-10).

Die Glaskugeln weisen vorzugsweise eine Rundheit von etwa 0,80 - 0,97, vorzugsweise > 0,95 (Achsenverhältnis Länge zu Breite) auf. Eine Eigenschaftskombination ist aus der später folgenden Auflistung (Anlage 1) ersichtlich.

Zur bevorzugten Teilchengröße des adsorbierenden Reinigungsstoffs sowie des inerten teilchenförmigen Reinigungsmaterials zum Entfernen von Trübstoffen sind folgende bevorzugte Rahmenbedingungen von Vorteil. Danach weist der Reinigungsstoff der Reinigungseinrichtung (A) eine Teilchengröße von etwa 0,4 mm bis 5 mm, insbesondere von etwa 0,4 mm bis 2,5 mm, auf und/oder das Reinigungsmaterial der Reinigungseinrichtung (B) einen Teilchendurchmesser von etwa 0,25 mm bis 5 mm, insbesondere von etwa 0,5 bis 1,25 mm. Als besonders vorteilhafte Rahmenbedingung kann der Bereich von etwa 0,7 bis 1,0 mm angegeben werden.

Es hat sich bei der praktischen Ausführung der Erfindung gezeigt, dass es besonders vorteilhaft ist, wenn der erfindungsgemäß heranzuziehende teilchenförmige adsorbierende Reinigungsstoff der Reinigungseinrichtung (A) in wasserdurchlässigen Behältern, insbesondere in Pads und/oder Beuteln, enthalten ist. Hierdurch wird ein Austausch des Reinigungsstoffs der Reinigungseinheit (A) erheblich erleichtert. Die wasserdurchlässigen Behälter, insbesondere die Pads und/oder Beutel, bestehen vorzugsweise aus textilem Material, insbesondere aus einem Gewebe. Das Gewebe des/der Pads bzw. Beutel können in allen Größen vorliegen und sind mit Vorteil auf Basis von Metall/Metallgemischen, Papier, Natur- oder synthetischem Textil (Baumwolle, Leinen, Polymere) aufgebaut, vorstellbar auch mit antiseptischer Wirkung, wie beispielsweise medizinische Textilien (mit Ag, Cu, Ni, Sn dotiert) aufgebaut, um eine Verkeimung zu minimieren. Dabei sind Pad-Größen von 0,1 Litern bis zu 10.000 Litern (Big-Bag) realisierbar. Praktikabel sind insbesondere Größen bis 50 Liter. Die Pads bzw. Beutel können genäht, geklebt, geheftet oder geschraubt sein. Auch andere Arten von Verbindungen sind denkbar.

Vorzugsweise ist das Gewebe der Pads bzw. der Beutel nicht wasserlöslich. Ebenfalls vorstellbar ist, dass das Gewebe der Pads bzw. Beutel wasserlöslich ist. Das Gewebe kann aus Stärke-, Gelatine-, Lignin- oder auf wasserlöslicher Kunststoff-/PolymerBasis hergestellt werden. Nach einer Kontaktzeit von wenigen Minuten bis zu mehreren Tagen lösen sich diese wasserlöslichen Gewebe dann auf und geben den Reinigungsstoff bzw. das Reinigungsstoffgemisch - ohne Dosiertechnik - in die Aufbereitung frei. In der Aufbereitung wird der Reinigungsstoff, beispielsweise Pulver-AktivKohle bzw. das Reinigungsstoffgemisch gereinigt, um ihn bzw. es danach wiederzuverwenden.

Im Falle der durchströmten Pads erweist es sich als vorteilhaft, wenn diese so aufgebaut sind, dass die angeströmte Seite eine höhere Durchlässigkeit oder Permeabilität aufweist, realisierbar durch ein Gewebe mit größerer Maschenweite (z.B. Mesh-Nr. 4, 4,75 mm Maschenweite), als die Seite mit einem Gewebe kleinerer Maschenweite (z.B. Mesh-Nr. 20, 0,85 mm Maschenweite), wo das Fluid wieder austritt. Für die erfindungsgemäße erste Reinigungseinrichtung haben sich Maschenweiten von etwa 9,5 mm (Mesh-Nr. 2), bei sehr grobem Material über etwa 1 mm (Mesh-Nr. 18), wenn eine handelsübliche Körnung gewählt wird 1-3 mm bis 1 µm, wenn pulverförmiges Material eingesetzt wird, als zweckmäßig erwiesen.

Eine besonders vorteilhafte Weiterbildung der erfindungsgemäßen Reinigungseinheit, die dies in Form zweier Alternativen, ist dadurch gekennzeichnet, dass 1.) in Strömungsrichtung von Reinigungseinrichtung A zur Reinigungseinrichtung B zwischen den beiden Reinigungseinrichtungen A, B eine Flockungseinrichtung und/oder nach der Reinigungseinrichtung B eine Desinfektionseinheit oder 2.) in Strömungsrichtung von Reinigungseinrichtung B zur Reinigungseinrichtung A vor der Reinigungseinrichtung B eine Flockungseinrichtung und/oder eine Desinfektionseinheit nach der Reinigungseinrichtung (A) angeordnet sind.

Wie ersichtlich, wird auch hier das erfindungsgemäße Prinzip der Trennung der "*adsorbierenden Reinigungsstufe*" von der "*filtrierenden Reinigungsstufe*" strikt eingehalten. Unabhängig davon, ob die Reinigungseinrichtung A der Reinigungseinrichtung B nach- oder vorgeschaltet ist, gesehen in Strömungsrichtung, laufen hier stets folgende Vorgänge bzw. Reaktionen ab: 1. Adsorption von halogenierten Kohlenwasserstoffen, insbesondere trihalogenen Methanen (Haloformen) und AOX (adsorbierbare Organohalogenverbindungen) an und in den Poren des eingesetzten Reinigungsstoffs, insbesondere der Aktivkohle, und 2. Abbau von Aminen, insbesondere Chloraminen, und anderen giftstoffhaltigen organischen Verbindungen. Die Reduktion von organisch gebundenem Stickstoff (Beispiel: Chloramin) stellt eine rein chemisch-katalytische Reaktion zwischen den Wasserinhaltsstoffen und dem jeweiligen Reinigungsstoff, insbesondere Aktivkohle, dar, z.B. Trichloramin (N-Cl₃), Dichloramin (N-Cl₂-H) oder auch die Eliminierung von freiem Chlor.

Bei den vorteilhaften Ausgestaltungen der erfindungsgemäßen Reinigungseinheit sind, wie gezeigt, Desinfektionseinheiten herangezogen. Von Vorteil ist es dabei, dass eine weitere Desinfektionseinheit zwischen der Reinigungseinrichtung (A) und der Reinigungseinrichtung (B) vorgesehen ist.

Bei der Wahl der Desinfektionsmittel unterliegt die Erfindung keinerlei wesentlichen Einschränkung. In Betracht kommen insbesondere Natriumperoxodisulfat, Chlor bzw. Chlorverbindungen, wie Chlorgas, Chlorbleichlauge (Natrium- und Calciumhypochlorit), Chlordioxid (Trinkwasser), Trichlorisocyanursäure. Zweckmäßigerweise wird Chlor herangezogen. Die Verwendung von Chlor hat Kostenvorteile. Zudem werden durch Verwendung von Chlor viele gesetzliche Bestimmungen, insbesondere für Schwimmbäder, problemlos erfüllt.

Auch bei der Wahl des Flockungsmittels im Rahmen der Erfindung, dort innerhalb der Flockungseinrichtung, unterliegt die Erfindung keinen wesentlichen Einschränkungen. Das Flockungsmittel bewirkt die angestrebte Agglomeration der Schmutzteilchen in dem aufzubereitenden Wasser. Dabei kann es sich vorzugsweise handeln um Aluminium- und Eisensalze, insbesondere Aluminiumsulfat, Natriumaluminat, Eisen (III)-Chloride, aber auch um Flockungsmittel auf Polymerbasis.

Es hat sich als besonders vorteilhaft erwiesen, wenn die erfindungsgemäße Reinigungseinheit in ein zyklisches Reinigungssystem einbezogen bzw. integriert ist, das einen ersten Wasserbehälter aufweist, der durch eine Leitung mit einem zweiten Wasserbehälter fluidverbunden ist, wobei die Reinigungseinrichtung A dem zweiten Wasserbehälter zur Reinigung des sich darin befindlichen Wassers zugeordnet ist. Dabei wird es bevorzugt, dass der erste Wasserbehälter das Wasserbecken eines Schwimmbads oder Gewerbebetriebs und der zweite Wasserbehälter einen Wasserspeicher, insbesondere einen Schwallwasserspeicher, darstellt. Vorteilhaft ist es hieran, dass die sehr strengen gesetzlichen Normen für Schwimmbäder und Gewerbebetriebe technisch einfach eingehalten werden können.

Bei einer weiteren bevorzugten Ausführungsform der Erfindung ist die Reinigungseinheit (A) innerhalb des zweiten Wasserbehälters am Boden und/oder an den Wänden angeordnet. Hierdurch wird eine gleichmäßige Reinigung des Wassers in dem zweiten Wasserbehälter erreicht. Zudem wird sichergestellt, dass nahezu das komplette Wasser die Reinigungseinrichtung (A) durchströmt hat, bevor des den Wasserbehälter wieder verlässt. Dem Fachmann ist es ohne Weiteres ersichtlich, dass die Reinigungseinheit (A) auch außerhalb des zweiten Wasserbehälters angeordnet sein kann, wobei das Wasser von dem zweiten Wasserbehälter abgeleitet, in die Reinigungseinrichtung (A) geführt und von dort wieder in den zweiten Wasserbehälter rückgeführt wird. In Einzelfällen kann dieses zyklische System von Vorteil sein.

Bei der Verwirklichung der vorliegenden Erfindung hat es sich gezeigt, dass die Adsorptionsleistung des Reinigungsstoffs der Reinigungseinrichtung (A) dadurch vorteilhaft gesteigert werden kann, dass eine Einrichtung zur Erzeugung eines elektromagnetischen Feldes der Reinigungseinrichtung (A) derart zugeordnet ist, dass unter Einwirkung des elektromagnetischen Feldes der Reinigungsstoff, insbesondere in Form von Aktivkohle, eine erhöhte Adsorptionsleistung erhält. Dabei kann es bei dem angesprochenen zyklischen Reinigungssystem, das die erfindungsgemäße Reinigungseinheit einbezieht, von Vorteil sein, dass eine zweite Desinfektionseinrichtung zum Versetzen des Wassers des zweiten Wasserbehälters A mit einem Desinfektionsmittel mit dem Wasserbehälter A durch eine Rohrleitung derart verbunden ist, dass das Wasser des Wasserbehälters A durch die zweite Desinfektionseinrichtung zirkulierbar ist. Als Desinfektionsmittel wird hier insbesondere Natriumperoxidisulfat herangezogen. Durch die angesprochene Maßnahme wird eine Verkeimung des zweiten Wasserbehälters bzw. des Wassers im zweiten Wasserbehälter und in der Reinigungseinrichtung (A) weitgehend verhindert.

Dem Fachmann ist es ohne Weiteres möglich, bei Berücksichtigung der oben angesprochenen Parameter der erfindungsgemäßen Reinigungseinheit die Aufgabe, von der die Erfindung ausgeht, zu lösen. Er bedarf an sich keiner weiteren verfahrenstechnischen Hinweise. Dennoch soll unter Bezugnahme auf das die Erfindung verkörpernde und oben behandelte zyklische Reinigungssystem ein vorteilhaftes Verfahren wie folgt dargestellt werden:
Danach wird zur zyklischen Aufbereitung von Wasser, insbesondere von Schwimmbeckenwasser, so vorgegangen, dass Wasser aus einem ersten Wasserbecken einem zweiten Wasserbecken, insbesondere einem Schwallwasserspeicher, zugeführt wird.
Das Wasser aus dem zweiten Wasserbecken durchströmt eine erste Reinigungseinrichtung (A), die dem zweiten Wasserbecken zugeordnet ist und einen teilchenförmigen adsorbierenden Reinigungsstoff einer Mindest-BET-Oberfläche von 100 m²/g, insbesondere von 300 m²/g zum Entfernen von organischen Stoffen, insbesondere halogenierten Kohlenwasserstoffen, aus dem Wasser des zweiten Wasserbehälters enthält.
Das von der ersten Reinigungseinrichtung (A) vorgereinigte Wasser wird einer zweiten Reinigungseinrichtung (B) zugeführt und durchströmt diese. Diese enthält ein chemisch, insbesondere gegenüber Desinfektionsmitteln, inertes teilchenförmiges Reinigungsmaterial zum Entfernen von Trübstoffen aus dem Wasser. Das von der zweiten Reinigungseinrichtung weitergehend gereinigte Wasser wird wieder dem ersten Wasserbecken zugeführt, wobei das Wasser vor Eintritt in die zweite Reinigungseinrichtung (B) vorzugsweise mit einem Flockungsmittel zum Ausflocken von im Wasser enthaltenen Feststoffen behandelt wird. Nach Austritt aus der zweiten Reinigungseinrichtung (B) erfolgt die Behandlung mit einem Desinfektionsmittel. Das auf diese Weise weitestgehend gereinigte Wasser wird dem ersten Wasserbecken zugeführt.

Mit der Erfindung sind vielfältige Vorteile verbunden: Ein Vorteil liegt darin, dass das aufzubereitende Wasser besser gereinigt und ein Verkeimen der Filter bzw. Reinigungseinrichtungen weitgehend verhindert wird. Zudem lassen sich die Filter der Reinigungseinrichtungen, insbesondere durch Rückspülen, wieder leichter reinigen. Damit werden gesetzliche Normen der biologischen und physikalisch-chemischen Belastung des Wassers technisch einfacher eingehalten. Darüber hinaus können die einzelnen Filter auch leichter ausgetauscht werden.

Die Erfindung lässt sich, was sich aus den vorstehenden Ausführungen ergibt, technisch äußerst flexibel, je nach Bedarfsfall, verwirklichen. Von besonderem Vorteil ist sie, wie oben gezeigt, wenn sie in ein zyklisches Reinigungssystem eingebunden ist. Auch kann der beschriebene Kerngedanke der Erfindung der Trennung der "*adsorbierenden Reinigungsstufe*" von der "*filtrierenden Reinigungsstufe"* besonders vorteilhaft verwirklicht werden, wenn er in einem linearen (nicht zyklischen) Wasseraufbereitungssystem genutzt wird, wie zum Beispiel zur Trinkwasser- oder Betriebswassergewinnung (Kraftwerke, Industrie). In diesem Fall fließt das Wasser nicht über eine Rückflussleitung in den ersten Wasserbehälter zurück, sondern wird direkt ins Betriebs- oder Trinkwassernetz bzw. in Speicherbehälter eingeleitet. Hierzu wird das aufzubereitende Rohwasser (Brunnen-, Oberflächen-, Regenwasser oder Uferfiltrat) insbesondere wie folgt aufbereitet: Das Rohwasser wird aus einem ersten Wasserbehälter in analoger Weise zuerst über eine erste Reinigungseinrichtung von organischen Inhaltsstoffen (DOC) oder Schadstoffen (wie Pestiziden, Herbiziden, Arzneimittelrückständen und dgl.) befreit und gelangt dann, wenn notwendig mit Flockungsmittel beaufschlagt, in eine zweite Reinigungseinrichtung, wo Feststoffe (Flocken, Sediment, Schlamm, und, sofern keine Aufbereitung über eine Belüftung des Rohwassers, zum Beispiel in einem erfolgte, Eisen- und/oder Manganverbindungen) abgetrennt werden. Es kann auch umgekehrt, wenn notwendig mit einem Flockungsmittel beaufschlagt, zuerst über die zweite Reinigungseinrichtung und dann anschließend über die erste Reinigungseinrichtung geleitet werden. Danach gelangt dieses Wasser, bei Bedarf mittels Desinfektionsmittel, Härtebildnern, Phosphat usw. (im Falle der Verwendung als Trinkwasser entsprechend den Vorschriften der Trinkwasserverordnung) konditioniert, direkt ins Betriebs- oder Trinkwassernetz.

Im Übrigen hat sich bei einem Vergleich der erfindungsgemäß herangezogenen kugelförmigen Teilchen, insbesondere Glaskugeln, gegenüber dem Einsatz von Filtersand ein nicht erwarteter und besonderer Vorteil gezeigt: So haben praktische Rüttelversuche bewiesen, dass sich das Setzungsverhalten von Glaskugeln im Vergleich zum Filtersand absolut unterscheidet. Bei Glaskugeln ist kaum ein Setzen feststellbar. Die Setzungen erfolgen dabei innerhalb kurzer Zeit (einige Sekunden) und liegen weit unter 10%. Bei Sand ist ein sehr langsames Setzen (30 bis 60 Sekunden) festzustellen, das bis zu 20% betragen kann. Das Filtrationsverhalten bei Filtersand nähert sich erst nach einiger Zeit seinem optimalen Wert, anders als bei Glaskugeln, die sofort optimal filtrieren. Schließlich hat sich bei Abriebversuchen folgender Vorteil der Glaskugeln erwiesen: Bei Sand ergab sich ein Abrieb von < 100 µm und 7%, bei Glaskugeln ein entsprechender Vergleichswert von 0.6%. Der Abrieb > 100 µm und < 380 µm lag bei Sand bei 8,4 % und bei Glaskugeln bei 2,5%. Demzufolge verschleißt Sand schneller als Glaskugeln.

Bei Sand ergab sich ein Abrieb < 100 µm von 7%, ein Abrieb > 100 µm und < 380 µm von 8,4%, demzufolge insgesamt 15,4%; für Glas ergab sich ein Abrieb < 100 µm von 0,6%, ein Abrieb > 100 µm und < 380 µm von 2,5%, demzufolge insgesamt nur 3,1%.

Pro Jahr verschleißen demnach etwa 1% beim Glas und beim Sand bereits 5%, oder anders, nach etwa 18 Jahren ist der Sand komplett verschlissen, während die Glaskugeln einen Wert von weniger als 20% aufweisen. Somit ergibt sich in der Praxis ein um den Faktor 5 niedrigerer Abrieb bei Glaskugeln.

Die vorliegende Erfindung soll nachfolgend anhand von Figuren noch näher erläutert werden:

Es zeigen
- Fig. 1: eine erfindungsgemäße Reinigungseinheit, bei der das aufzubereitende Wasser von der Reinigungseinrichtung (A) zur Reinigungseinrichtung (B) strömt,
- Fig. 2: im Prinzip die Reinigungseinheit gemäß Fig. 1, wobei eine umgekehrte Strömungsrichtung des aufzubereitenden Wassers gewählt ist,
- Fig. 3: eine Ausführungsform der erfindungsgemäßen Reinigungseinheit, einbezogen in ein zyklisches Reinigungssystem, und
- Fig. 4: eine Übersicht über die Eliminierungsraten im Zusammenhang mit der Schichtdicke in Prozent bei einer Reinigung von Wasser mit einem erfindungsgemäßen Reinigungssystem.

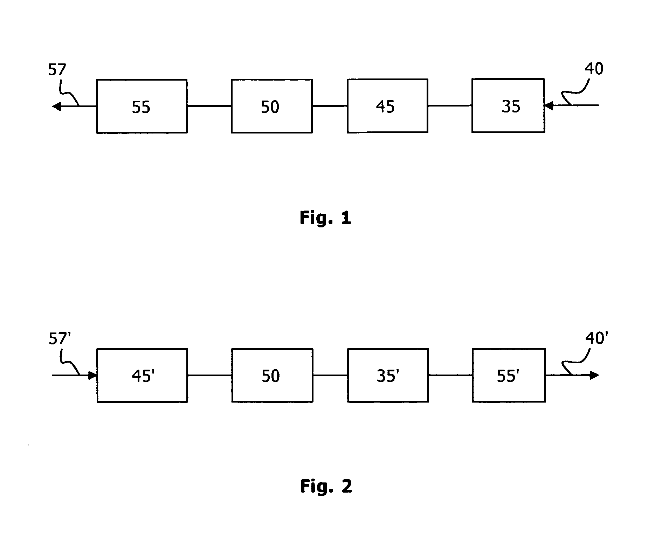

Nach der Fig. 1 wird aufzubereitendes Wasser von der Reinigungseinheit (A) (35) über eine Leitung (40) in eine Flockungseinrichtung (45) und darauf in die Reinigungseinrichtung (B) (50) geführt. Anschließend wird das weitergehend gereinigte Wasser in eine Desinfektionseinheit (55) geleitet und das daraus austretende Wasser über eine Leitung (57) fortgeführt.

Nach der Fig. 2 wird so verfahren, dass in Strömungsrichtung von Reinigungseinrichtung (B) (50) zur Reinigungseinrichtung (A) (35') eine Flockungseinrichtung (45') vor der Reinigungseinrichtung (B) (50) und nach der Reinigungseinrichtung (A) (35') eine Desinfektionseinheit (55') angeordnet ist.

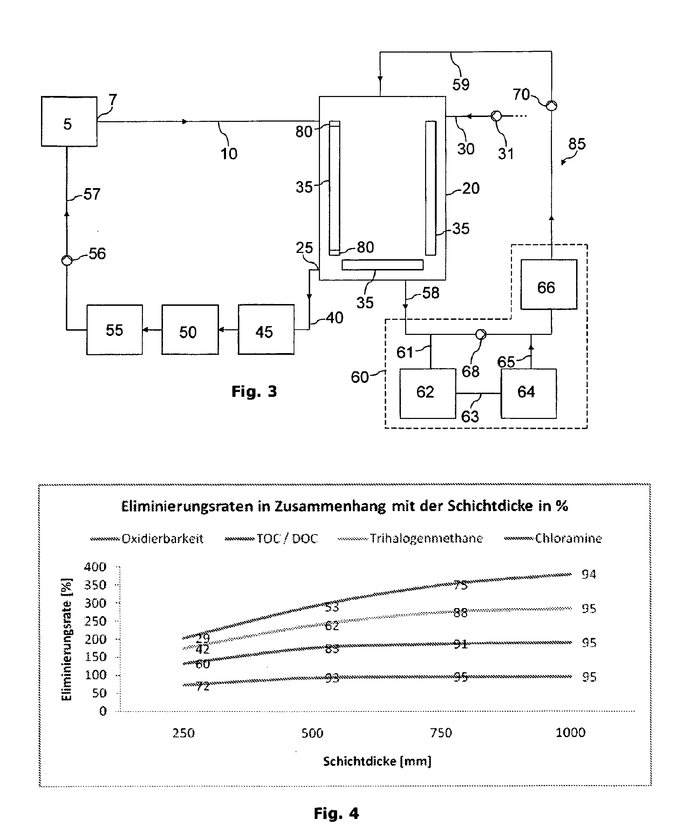

Die Fig. 3 zeigt folgende Sachverhalte: Das in Fig. 3 gezeigte zyklische Reinigungssystem reinigt bevorzugt Wasser eines Schwimmbeckens 5. Das Reinigungssystem kann auch Wasser jeglicher anderer Wasserbehälter reinigen, beispielsweise innerhalb eines Gewerbebetriebs.

Das aus dem Wasserbecken über die Leitung 10 abgeleitete Wasser fließt vorzugsweise am oberen Ende eines Schwallwasserspeicher 20 in diesen. Das abgeleitete Wasser kann mikrobiologisch kontaminiert sein. Neben erhöhten Koloniezahlen kann es ebenfalls Bakterien aufweisen, die die menschliche Gesundheit beeinträchtigen. Als Vertreter hiervon sind in der DIN 19643 insbesondere Escherichia coli (E. coli), Pseudomonas aeruginosa und Legionella spezies genannt.

Füllwasser wird über eine Leitung 30 zweckmäßigerweise durch eine erste Pumpe 31 am oberen Ende des Schwallwasserspeichers 20 in diesen geleitet, kann aber auch an anderen Stellen des Systems zugegeben werden. Das Füllwasser ersetzt verdunstetes Wasser oder auf andere Art aus dem Schwimmbecken 5 verlorengegangenes Wasser. Das Füllwasser kann entweder dem zentralen Trinkwasserversorgungsnetz entnommen werden oder z.B. aus einem Brunnen stammen. Das Füllwasser kann ebenfalls, insbesondere physikalisch-chemisch, aber auch mikrobiell, belastet sein. Die Belastung des Füllwassers richtet sich hauptsächlich nach der jeweiligen Grundwasserbelastung vor Ort.

In dem Schwallwasserspeicher 20 ist vorzugsweise die erste Reinigungseinrichtung (A) 35 an den Wänden und/oder am Boden des Schwallwasserspeichers 20 angeordnet. Als Befestigungen dienen zweckmäßigerweise spezielle Halterungen und/oder Gitter, die fest im Schwallwasserspeicher 20 verankert sind. Die Halterungen und/oder Gitter können alternativ lösbar verankert sein. Andere Anordnungen der ersten Reinigungseinrichtung 35 im Schwallwasserspeicher sind vorstellbar, beispielsweise an Leinen/Ketten befestigt oder auch frei schwimmend.

Die erste Reinigungseinrichtung (A) 35 kann anstatt in dem Schwallwasserspeicher 20 oder zusätzlich hierzu in den Anschwemmfilterkammern oder beim Skimmer angeordnet sein. Vorstellbar ist auch, dass die erste Reinigungseinrichtung (A) 35 nicht in dem Schwallwasserspeicher 20 angeordnet ist, sondern dass das Wassergemisch des Schwallwasserspeichers 20 aus diesem herausgeleitet und durch die erste Reinigungseinrichtung 35 geführt wird, wonach das von der ersten Reinigungseinrichtung 35 gereinigte Wasser zurück in den Schwallwasserspeicher geleitet wird.

Der Schwallwasserspeicher 20 ist in der in Fig. 3 gezeigten Ausführungsform quaderförmig. Andere Formen des Schwallwasserspeichers 20, wie beispielsweise kubusförmig oder eiförmig, sind vorstellbar. Die Zuführung 10 des abgebadeten Wassers und des Füllwassers liegt vorzugsweise an den gegenüberliegenden Stirnseiten des Schwallwasserspeichers. Die gesamte innere Geometrie des Schwallwasserspeichers 20 entspricht bevorzugt modernen hydraulischen Prinzipien.

Als Befestigung für die erste Reinigungseinrichtung (A) 35 im Schwallwasserspeicher 20 dienen bevorzugt spezielle Halterungen oder Gitter. Durch Anordnung der Befestigung am Boden bzw. an den Wänden des Schwallwasserspeichers 20 wird gewährleistet, dass das Wassergemisch, bestehend aus dem abgebadeten Beckenwasser sowie dem zur Verfügung gestellten Füllwasser gleichmäßig die erste Reinigungseinrichtung 35 durchströmt. Zudem wird durch diese Anordnung sichergestellt, dass (nahezu) alles Wasser die erste Reinigungseinrichtung (A) 35 durchströmt hat, bevor es aus dem Schwallwasserspeicher 20 abgeleitet wird.

Der Reinigungsstoff bzw. das Reinigungsstoffgemisch der ersten Reinigungseinrichtung (A) 35 ist zweckmäßigerweise in Pads oder Beuteln angeordnet sein. Hierdurch lässt sich auf einfache Art und Weise das Reinigungsmaterial der ersten Reinigungseinrichtung 35 (A) ganz oder teilweise austauschen. Zudem lassen sich die Pads bzw. die Beutel wie bei neueren Kaffeebereitungsmaschinen in entsprechende Vorrichtungen einbringen und so das Medium, in diesem Fall das Wasser, mit Druck durch das Pad bzw. die Beutel mit dem Reinigungsstoff befördern. Eine Vorrichtung wie ein Trommelrevolver zum Einbringen der Pads bzw. Beutel ist ebenfalls denkbar. Hierbei wird das Wasser durch die Pads gezogen oder gedrückt. Diese lässt sich mitsamt der Pad- oder Beutelvorrichtung problemlos nachrüsten.

Die Pads bzw. Beutel der ersten Reinigungseinrichtung (A) 35 sind beispielsweise durch eine Vorrichtung mit Schnellverschluss (Spannring) befestigt. Der Spannring umfasst dabei die beiden Flansche der Vorrichtung. Dabei ist auf der in diesem Fall in zwei Hälften trennbaren Vorrichtung jeweils ein Flansch angebracht. Nach Öffnen des Spannrings lassen sich die beiden Hälften der Vorrichtung aufklappen, das Pad bzw. der Beutel entfernen und ein neues bzw. ein neuer einsetzen. Anschließend wird die Vorrichtung wieder zusammengeklappt und der Spannring verschließt diese wieder. Ebenfalls denkbar ist ein Schubfach, welches das Pad bzw. den Beutel aufnimmt und das mittels einer Spannvorrichtung in der Vorrichtung arretiert ist. Eine weitere Möglichkeit ist eine mehrteilige Vorrichtung, vorzugsweise zweiteilig, die sich auseinanderbringen, vorzugsweise durch Schieben und/oder Drehen, lässt und so das Pad bzw. den Beutel freigibt bzw. für die Aufnahme eines neuen Pads bzw. eines neuen Beutels bereit ist. Danach wird die Vorrichtung wieder zusammengefügt und gegebenenfalls arretiert oder vorgespannt. Eine Vorspannung kann beispielsweise federbelastet erfolgen. Die einzelnen Teile der Vorrichtung werden dann durch Federn zusammengehalten. Auch hydraulische, pneumatische oder elektromotorische Einrichtungen können diese Zwecke erfüllen. Dies hat den Vorteil, dass dies das Öffnen, beispielsweise beim Wechseln des Pads oder der Beutel, durch Reduzierung oder sogar Umkehr der Druckverhältnisse der Hydraulik und/oder Pneumatik sehr erleichtert.

An den Reinigungsstoff bzw. das Reinigungsstoffgemisch der ersten Reinigungseinrichtung (A) 35 kann durch Magnetfelderzeugungsvorrichtungen 80 ein elektromagnetisches Feld angelegt werden. Hierdurch wird die Adsorptionsleistung des Reinigungsstoffs bzw. des Reinigungsstoffgemisches deutlich erhöht. Dies führt zu einer verbesserten Reinigungsleistung der ersten Reinigungseinrichtung (A) 35. Die Magnetfelderzeugungsvorrichtungen 80 können Permanentmagnete oder Elektromagnete sein. Sie können ein- und ausgeschaltet werden. Das erzeugte Magnetfeld kann homogen oder inhomogen sein. Die Frequenz des Magnetfelds kann verändert werden, um gezielt die Adsorption einzelner Verbindungen zu erhöhen bzw. zu verändern. Vorstellbar ist es, dass die zu adsorbierenden Teilchen vor dem Durchströmen der ersten Reinigungseinrichtung 35 angeregt werden, so dass die Adsorptionsleistung gezielt für diese angeregten Teilchen verändert wird. Insbesondere zur Reinigung von radioaktiven Verunreinigungen ist diese Art der Erhöhung der Adsorptionsleistung für bestimmte Teilchen vorteilhaft.

Um eine Verkeimung der ersten Reinigungseinrichtung (A) bzw. des Reinigungsstoffs der ersten Reinigungseinrichtung (A) 35 zu verhindern, wird bevorzugt das Wasser des Schwallwasserspeichers 20 umgewälzt und dabei desinfiziert. Hierzu wird das Wasser aus dem Schwallwasserspeicher 20 zweckmäßigerweise abgeleitet und durch ein Rohrleitungssystem 85 geführt, bevor es wieder dem Schwallwasserspeicher 20 zugeführt wird. Das Rohrleitungssystem 85 umfasst vorzugsweise eine zweite Desinfektionseinrichtung 60.

Die zweite Desinfektionseinrichtung 60 umfasst bevorzugt mehrere Teile: Zweckmäßigerweise wird das Wasser auf dem Boden des Schwallwasserspeichers durch eine dritte Pumpe 68 abgepumpt. Eine Regeleinrichtung 62 misst bevorzugt mittels einer Messleitung 61 die Redox-Spannung des aus dem Schwallwasserspeicher 20 abgeleiteten Umwälzwassers 58. Die Redox-Spannung ist ein Maß für die Verkeimung des Wassers. Unterschreitet die Redox-Spannung einen Minimalwert, der insbesondere bei etwa 780 mV liegt, so aktiviert die Regeleinrichtung 62 mittels einer Verbindungsleitung 63 eine mit der Regeleinrichtung 62 verbundene Dosiereinrichtung 64. Die Dosierungseinrichtung 64 versetzt bevorzugt nun das Umwälzwasser 58 mit Desinfektionsmittel 65.

Als Desinfektionsmittel der zweiten Desinfektionseinrichtung 60 dient bevorzugt Natriumperoxodisulfat oder ein anderes gleichwertiges Mittel. Die Mitteldosierung des Desinfektionsmittels erfolgt vorzugsweise direkt proportional zum Volumenstrom. Die Menge des Desinfektionsmittels 65 wird zweckmäßigerweise durch die Dosierungseinrichtung 64 bestimmt. Nach dem Versetzen des Wassers mit Desinfektionsmittel 65 wird vorzugsweise das Wasser durch einen Reaktionsmischer 66 geleitet, in dem das Umwälzwasser 58 und das Desinfektionsmittel durchmischt wird.

Nachdem das Wasser den Reaktionsmischer 66 und somit auch die zweite Desinfektionseinrichtung 60 verlassen hat, wird das desinfizierte Umwälzwasser 59, wenn hydraulisch sinnvoll, vorzugsweise auch mittels einer weiteren Pumpe 70, zurück in den Schwallwasserspeicher 20 geleitet. Hierbei wird das desinfizierte Umwälzwasser 59 bevorzugt an der oberen Seite des Schwallwasserspeichers 20 diesem zugeführt.

Nach Durchlaufen der ersten Reinigungseinrichtung 35 sind weitgehend alle (bis zu 95%) organischen Stoffe aus dem Wasser entfernt.

Das von der ersten Reinigungseinrichtung (A) 35 vorgereinigte Wasser bzw. Wassergemisch 40 wird zweckmäßigerweise durch einen Schwallwasserspeicherabfluss 25 zu einer Flockungseinheit 45 geleitet. Hier wird das vorgereinigte Wasser 40 vorzugsweise mit einem Flockungsmittel, beispielsweise Flockungsmittel auf Aluminiumbasis, insbesondere Aluminiumsalzen, versetzt. Das Flockungsmittel bewirkt, dass die Trübstoffe koagulieren und damit größere Teilchen bilden, welche im nachfolgend geschalteten Filter (50) abgeschieden werden. Die Dosiermenge richtet sich bevorzugt nach dem Trübungsgrad des von organischen Stoffen befreiten Wassergemisches (nach Wasserpassage durch den Schwallwasserspeicher 20) sowie nach dem in diesem Wasser bzw. Wassergemisch 40 vorhandenen Phosphatgehalt. Die kontinuierliche Dosierung erfolgt zweckmäßigerweise direkt proportional zum Volumenstrom, wobei das stöchiometrische Verhältnis faktormäßig auf über 1 angehoben und gehalten wird. Zusätzlich kann hier auch Pulver-Aktivkohle dosiert werden, falls notwendig. Die Dosierung kann entweder durch eine separate Dosieranlage oder auch vorzugsweise, wie beschrieben, durch Zugabe wasserlöslicher Beutel mit Pulver-Aktivkohle-Inhalt in den Schwallwasserbehälter und über die Entnahme (25) zugegeben werden.

Nach dem Durchströmen der Flockungseinheit 45 wird das Wasser einer zweiten Reinigungseinrichtung (B) 50 zugeführt. Hier findet eine sogenannte neutrale Filtration statt. Das weitgehend homogene Filterbett besteht aus einem chemisch insbesondere gegenüber Desinfektionsmitteln wie Natriumperoxodisulfat und/oder Chlor, inerten teilchenförmigen Reinigungsmaterial. "*Chemisch inert*" ist in diesem Zusammenhang so zu verstehen, dass das Reinigungsmittel weitgehend nicht chemisch, insbesondere nicht mit dem Desinfektionsmittel, reagiert.

Die Filterschichthöhe des Reinigungsmaterials der zweiten Reinigungseinrichtung (B) 50 richtet sich insbesondere nach der Körnung des Reinigungsmaterials, wobei sich aus diesen beiden genannten Daten eine konstante Aufnahmefläche ergibt. Daraus resultiert ein entsprechender Vorteil, wonach dieses Filtersystem für jegliche Raumhöhen (beispielsweise Keller) in Frage kommen kann.

Es stehen verschiedene Körnungen des inerten Reinigungsmaterials zur Verfügung. Dieses kann in verschiedenen Qualitäten verschiedener Korngrößenbereiche sowie unterschiedlicher Unter- bzw. Überkornanteile eingesetzt werden. Ein Vorteil des genannten Reinigungsmaterials ist, dass hinsichtlich der Filtrationseigenschaften beim gesiebten Produkt in gleichmäßiger Kugelform ohne Unter- bzw. Überkornanteile ein Optimum erreicht werden kann.

Das inerte Reinigungsmaterial der zweiten Reinigungseinrichtung (B) 50 besitzt vorzugsweise keine weiteren Bestandteile, weder organischer noch anorganischer Natur. Daher findet weitgehend keine Stoffabgabe an das Wasser statt, das die zweite Reinigungseinrichtung (B) 50 durchströmt.

Ein weiterer Vorteil des inerten Reinigungsmaterials besteht darin, dass sich bei der Beladung durch das Flockungsmittel - bedingt durch die Kugelform - Kapillaren bilden, die eine wesentlich schärfere Filtration ermöglichen (Trübungswert kleiner 0,02 FNU) als bei herkömmlichen Filtermaterialien, wie beispielsweise Quarzsand mit körniger Struktur. Die inerten Glaskugeln haben eine Rohdichte, die mit etwa 2,5 kg/Liter etwa der von Quarzsand entspricht. Allerdings ist die Permeabilität eines Filters mit kugelförmigen Reinigungsmaterial etwa fünfmal so hoch im Vergleich zur Permeabilität eines Filter mit körnigem Material gleicher Korngrößen. Somit ist auch der spezifische Widerstand beim kugelförmigen Reinigungsmaterial annähernd um den Faktor 5 niedriger als bei dem körnigen Reinigungsmaterial.

Mit der Gleichung nach Carman-Kozeny errechnen sich z.B. bei Korngrößen von 0,75 mm bis 1 mm für Glaskugeln:

| | | |
|---|---|---|
| 1. | Permeabilität: | 1,5 * 10⁻⁸ m² |
| 2. | Spezifischer Widerstand: | 79689 m/kg |

Damit bieten sich zwei Möglichkeiten: Man reduziert die Korngröße des eingesetzten Glaskugelmaterials auf Korngrößen von 0,2 mm bis 0,5 mm. Nach obiger Gleichung erhält man selbst hier mit 3,17 * 10⁻⁹ eine in etwa gleich große Permeabilität und somit mit 396536 m/kg einen in etwa gleich großen spezifischen Widerstand im Vergleich zu Filtersand mit den größeren Korngrößen.

Bei mindestens gleicher Filtrationsleistung lässt sich durch das eingesetzte Reinigungsmaterial erheblich Spülwasser sparen, da die Spülgeschwindigkeiten bei diesem feineren Material wesentlich geringer sein müssen. Wenn allerdings hierdurch die Wasserbilanz - die Norm DIN 19643 verlangt mindestens 30 Liter pro Badegast - nicht mehr erfüllt ist, gibt es eine weitere Möglichkeit:

Man verwendet zweckmäßigerweise Glaskugeln gleicher Korngrößen. Durch die oben genannten Werte reduzieren sich die Druckverluste. Somit kann Pumpenleistung gespart werden. Weiter erhöhen sich hierdurch die Filterstandzeiten und somit können Wasser und Energie gespart werden.

Die Spülung des Reinigungsmaterials der zweiten Reinigungseinrichtung 50 erfolgt durch die Umkehrung der Fließrichtung. Bedingt durch die insbesondere glatte Oberfläche der Kugeln werden die abgelagerten Stoffe (Aluminiumhydroxid, Aluminiumphosphat, Trübstoffe, Flocken usw.) wesentlich einfacher aus dem Reinigungskörper in die Kanalisation bzw. einen Vorfluter (nicht gezeigt) abtransportiert.

Da das Filtermaterial keine Eigenschaften aufweist, die auf den Filterprozess negativ einwirken könnten (Unterkorn, Überkorn, ungleichmäßige, zerklüftete Form), reicht für die Spülung bei der angemessenen Spülgeschwindigkeit eine Spülwassermenge von 2,5 m³/m² bis 3 m³/m² Filterfläche. Im Vergleich hierzu benötigen DIN-gemäße Systeme bis zu 11 m³/m² Filterfläche an Spülwasser. Die Spülgeschwindigkeit liegt in analoger Weise zum Filtersand zwischen 60 und 80 m/h, kann allerdings je nach Temperatur und Korngröße des Reinigungsmaterials bei feinerer Körnung noch wesentlich reduziert werden (kleiner 30 m/h).

Die angesprochenen Vorteile erlauben gegenüber den bisher sowohl im öffentlichen als auch im privaten Bäderbau verwendeten Reinigungsmaterialien eine andere Spülzeitfrequenz. Diese liegt zwischen einmal pro Woche bzw. alle 14 Tage. Hierdurch wird nicht nur Wasser, Abwasser, Energie und Betriebsmittel eingespart, sondern es wird entscheidend zur Schonung von Ressourcen beitragen.

Die erste Reinigungseinrichtung (A) 35 reinigt insbesondere das Wasser von Chlorverbindungen und halogenierten Kohlenwasserstoffen, insbesondere Trihalogenmethanen, halogenierten Organosäuren (Mono-, Di- und Trichloressigsäure) und Chloraminen. Trihalogenmethane und Chloramine bilden sich insbesondere durch auf den Badegast zurückgehende Verschmutzungen des Wassers. Durch die Reduzierung des gebundenen Chlors erhält man ein weitgehend geruchsfreies Schwimmbeckenwasser und verhindert dadurch gleichzeitig den typischen Chlorgeruch in Schwimmbädern.

Nachdem das Wasser durch die zweite Reinigungseinrichtung (B) 50 geströmt ist und dabei von Chlorverbindungen und halogenierten Kohlenwasserstoffen gereinigt wurde, wird das Wasser einer ersten Desinfektionseinrichtung 55 zugeführt. Hier wird das Wasser zweckmäßigerweise mit einem Desinfektionsmittel, vorzugsweise einem chlorhaltigen Desinfektionsmittel, versetzt.

Da die Konzentration der Belastungsstoffe durch die Reinigung der ersten Reinigungseinrichtung (A) 35 und der zweiten Reinigungseinrichtung (B) 50 sehr stark reduziert wird (es befinden sich praktisch keine organischen Bestandteile mehr im Wasser, siehe Tabelle), ist eine geringere Konzentration an chlorhaltigen Desinfektionsmitteln gegenüber bisher bekannten Reinigungssystemen ausreichend.

Da die Desinfektionsmittel auf Chlorbasis nicht nur desinfizierend, sondern auch oxidierend auf Belastungsstoffe organischer Herkunft einwirken können, ist der Gehalt an freiem Chlor im Konzentrationsbereich von 0,3 mg/l bis 0,6 mg/l festgelegt. Da die organischen Substanzen im erfindungsgemäßen Reinigungssystem weitgehend beseitigt werden, entfällt damit auch weitgehend die oxidierende Komponente im gesamten Reinigungssystem. Das Chlor übernimmt daher im Wesentlichen nur die Aufgabe, das gefilterte Wasser zu desinfizieren und damit die Einhaltung der DIN-gemäßen Wasserbeschaffenheit in den jeweiligen Beckenbereichen sicherzustellen. Somit kann die Dosiermenge des Chlors beträchtlich reduziert werden. Dies ist ein weiterer Vorteil, da das Minimierungsgebot in einem Reinigungssystem im Vordergrund steht.

Zur Sicherstellung der DIN-gemäßen Beschaffenheit des gereinigten Wassers kann die Überwachung mittels einer kontinuierlichen Messung des Trübungsgrads und der Partikelzählung hinsichtlich Quantität und Partikelgröße, bevorzugt in einem Partikelbereich von etwa 0,5 µm (Bakterienbereich) bis 50 µm, sowie des Redox-Potentials unmittelbar vor dem Eintritt des gereinigten Wassers in das Wasserbecken/Schwimmbecken 5 angewendet werden. Denkbar ist diesbezüglich auch eine Differenzmessung durch eine zusätzliche Partikelzählung in unfiltriertem Wasser. Nachdem das Wasser die erste Desinfektionseinrichtung 55 durchströmt hat, wird das Reinwasser 57, wenn hydraulisch erforderlich, durch eine zweite Pumpe 56, in das Wasserbecken bzw. Schwimmbecken 5 zurückgeleitet. Hierdurch ist der Kreislauf des Wassers geschlossen.

Fig. 4 zeigt eine Übersicht über die Eliminierungsraten in Prozent (y-Achse) für verschiedene Stoffe, die sich im Wasser befinden, durch das erfindungsgemäße Reinigungssystem A in Zusammenhang mit der Schichtdicke (x-Achse) des Reinigungsmaterials der zweiten Reinigungseinrichtung. Die oberste Linie in Fig. 2 zeigt die Eliminierungsrate für Chloramine, die zweitoberste Linie die Eliminierungsrate für Trihalogenmethane; die drittoberster bzw. zweitunterste Linie die Eliminierungsrate für die Oxidierbarkeit, die den Kaliumpermanganatindex des Wassers wiedergibt. Die unterste Linie in Fig. 2 zeigt die Eliminierungsrate für das Verhältnis Total Organic Carbon (TOC)/Dissolved Organic Carbon (DOC). Die in Tabelle 1 dargestellten Werte sind in der Fig. 2 grafisch wiedergegeben. Die Werte der Tabelle 1 und der Fig. 2 wurden unter folgenden Versuchsbedingungen erhalten:

| | |
|---|---|
| Temperatur des Wassermediums (konstant) [° Celsius] | 32 |
| Ausgangskonzentration an freiem Chlor (mg/l) | variabel |
| Lineare Durchströmungsgeschwindigkeit (konstant) [cm/s] | 0,7 |
| Schichtdicke [mm] | siehe Tabelle |
| Kontaktzeit (Optimum) bei 1000 mm [s] | 143 |

Die Werte der Tabelle 1 und der Fig. 4 wurden in 10 Versuchen mit im Labormaßstab resultierenden Erhebungen erhalten.

**Tabelle 1**

| Parameter/Schichtdicke | 250 mm | 500 mm | 750 mm | 1000 mm |
|---|---|---|---|---|
| Oxidierbarkeit/Kalium-permanganatindex | 72% | 93% | 95% | > 95% |
| Total organic carbon (TOC)/dissolved organic carbon (DOC) | 60% | 83% | 91% | >95% |
| Trihalogenmethane | 42% | 62% | 88% | >95% |
| Chloramine | 29% | 53% | 75% | 94% |

Wie ersichtlich, ist es dem Fachmann ohne Weiteres möglich, die oben beschriebenen Einheiten und/oder Systeme ohne erfinderische Bemühungen zu kombinieren, ohne sich von dem geschilderten Kerngedanken der vorliegenden Erfindung zu lösen.

**Anlage 1**

| Größenbereich | Druckfestigkeit ^{*)} | Schüttgewicht | Stück pro kg |
|---|---|---|---|
| 0 - 20 µm | --------- | 0,70 kg/dm³ | --------- |
| 0 - 50 µm | --------- | 1,30 kg/dm³ | --------- |
| 40 - 70 µm | --------- | 1,33 kg/dm³ | --------- |
| 70 - 110 µm | --------- | 1,37 kg/dm³ | --------- |
| 90 - 150 µm | --------- | 1,40 kg/dm³ | --------- |
| 100 - 200 µm | --------- | 1 ,42 kg/dm³ | --------- |
| 150 - 250 µm | --------- | 1,43 kg/dm³ | --------- |
| 200 - 300 µm | --------- | 1,44 kg/dm³ | --------- |
| 200 - 400 m | --------- | 1,45 kg/dm³ | --------- |
| 300 - 100 µm | --------- | 1,46 kg/dm³ | --------- |
| 400 - 600 µm | --------- | 1,47 kg/dm³ | --------- |
| 400 - 800 µm | --------- | 1,49 kg/dm³ | --------- |
| 800 - 1000 µm | --------- | 1,51 kg/dm³ | --------- |
| 1000 - 1300 µm | --------- | 1,51 kg/dm³ | --------- |
| 0,25 - 0,50 mm | --------- | 1,46 kg/dm³ | 14.486.600 |
| 0,40 - 0,60 mm | --------- | 1,47 kg/dm³ | 6.111.500 |
| 0,50 - 0,75 mm | --------- | 1,49 kg/dm³ | 3.129.100 |
| 0,75 - 1,00 mm | --------- | 1,50 kg/dm³ | 1.140.300 |
| 1 ,00 - 1,30 mm | 250 - 350 N | 1,51 kg/dm³ | 502.300 |
| 1,25 - 1,65 mm | 350 - 500 N | 1,51 kg/dm³ | 250.580 |
| 1,55 - 1,85 mm | 500 - 650 N | 1,52 kg/dm³ | 155.490 |
| 1,70 - 2,10 mm | 600 - 750 N | 1,52 kg/dm³ | 111.370 |
| 2,00 - 2,40 mm | 750 - 900 N | 1,53 kg/dm³ | 71.740 |
| 2,40 - 2,90 mm | 950 - 1100 N | 1,53 kg/dm³ | 41.050 |
| 2,85 - 3,45 mm | 1100 - 1450 N | 1,53 kg/dm³ | 24.440 |
| 3,40 - 4,00 mm | 1450 - 1650 N | 1,53 kg/dm³ | 15.080 |
| 3,80 - 4,40 mm | 1700 - 2100 N | 1,53 kg/dm³ | 11.080 |

### Bezugszeichenliste:

- 1: Reinigungssystem
- 5: Wasserbecken (Schwimmbecken)
- 7: Wasserbeckenabfluss
- 10: aus dem Wasserbecken abgeleitetes Wasser
- 20: Schwallwasserspeicher
- 25: Schwallwasserspeicherabfluss
- 30: Füllwasser
- 31: erste Pumpe
- 35: erste Reinigungseinrichtung
- 35': erste Reinigungseinrichtung
- 40: vorgereinigte Wasser
- 45: Flockungseinheit
- 45': Flockungseinheit
- 50: zweite Reinigungseinrichtung
- 50: zweite Reinigungseinrichtung
- 55: erste Desinfektionseinrichtung
- 55': erste Desinfektionseinrichtung
- 56: zweite Pumpe
- 57: Reinwasser
- 58: Umwälzwasser
- 59: desinfiziertes Umwälzwasser
- 60: zweite Desinfektionseinrichtung
- 61: Messleitung
- 62: Regeleinrichtung
- 63: Verbindungsleitung Regeleinrichtung - Dosiereinrichtung
- 64: Dosiereinrichtung
- 65: Desinfektionsmittel
- 66: Reaktionsmischer
- 68: dritte Pumpe
- 70: vierte Pumpe
- 80: Magnetfelderzeugungsvorrichtung
- 85: Rohrleitungssystem

## Patentansprüche

1. Reinigungseinrichtung zum Aufbereiten von Wasser, insbesondere von industriellen Brauch- und Abwässern, Trinkwasser und Schwimmbeckenwasser, wobei die Reinigungseinheit wenigstens zwei Reinigungseinrichtungen (A, B) (35, 50) aufweist, die miteinander über eine Verbindungsleitung (40) fluidverbunden sind, wobei eine Reinigungseinrichtung (A) (35) einen teilchenförmigen adsorbierenden Reinigungsstoff einer Mindest-BET-Oberfläche von 100 m²/g, insbesondere 300 m²/g, zum Entfernen organischer Stoffe, insbesondere von halogenierten Kohlenwasserstoffen und von Aminen, und eine weitere Reinigungseinrichtung (B) (50) ein chemisch, insbesondere gegenüber Desinfektionsmitteln inertes teilchenförmiges Reinigungsmaterial zum Entfernen von Trübstoffen enthält,
**dadurch gekennzeichnet, dass**
die Teilchen des Reinigungsmaterials der Reinigungseinrichtung (B) (50) kugelförmig sind und eine glatte Oberfläche mit einer Rauheit (Ra) unter 1 µm aufweisen.

2. Reinigungseinheit nach Anspruch 1, **dadurch gekennzeichnet, dass** 1.) in Strömungsrichtung von Reinigungseinrichtung (A) (35) zur Reinigungseinrichtung (B) (50) zwischen den beiden Reinigungseinrichtungen (A, B) (35, 50) eine Flockungseinrichtung (45) und/oder nach der Reinigungseinrichtung (B) (50) eine Desinfektionseinheit (55) oder 2.) in Strömungsrichtung von Reinigungseinrichtung (B) (50) zur Reinigungseinrichtung (A) (35) vor der Reinigungseinrichtung (B) (50) eine Flockungseinrichtung (45') und/oder eine Desinfektionseinheit (55') nach der Reinigungseinrichtung (A) (35) angeordnet sind.

3. Reinigungseinheit nach Anspruch 2, **dadurch gekennzeichnet, dass** eine weitere Desinfektionseinheit zwischen der Reinigungseinrichtungen (A, B) (35, 50) angeordnet ist.

4. Reinigungseinheit nach einem der Ansprüche 1 bis 3, **dadurch gekennzeichnet, dass** der Reinigungsstoff der Reinigungseinrichtung (A) (35) eine maximale BET-Oberfläche von 1800 m²/g, insbesondere von etwa 750 bis 1200 m²/g aufweist.

5. Reinigungseinheit nach mindestens einem der vorhergehenden Ansprüche, **dadurch gekennzeichnet, dass** der Reinigungsstoff der Reinigungseinheit (A) (35) abriebfest ist, insbesondere eine Abriebzahl nach der (AWWA)-Methode von etwa 50 bis 98 und/oder eine Kugelhärte nach DIN(EN) 12915 von etwa 50 bis 100%, insbesondere von etwa 70 bis 99%, aufweist.

6. Reinigungseinheit nach mindestens einem der vorhergehenden Ansprüche, **dadurch gekennzeichnet, dass** der Reinigungsstoff der Reinigungseinrichtung (A) (35) in wasserdurchlässigen Behältnissen, insbesondere in Pads und/oder Beuteln, enthalten ist.

7. Reinigungseinheit nach mindestens einem der vorhergehenden Ansprüche, **dadurch gekennzeichnet, dass** der Reinigungsstoff der Reinigungseinrichtung (A) (35) Aktivkohle umfasst.

8. Reinigungseinheit nach Anspruch 1, **dadurch gekennzeichnet, dass** die Teilchen Glaskugeln sind.

9. Reinigungseinheit nach mindestens einem der vorhergehenden Ansprüche, **dadurch gekennzeichnet, dass** der Reinigungsstoff der Reinigungseinrichtung (A) (35) eine Teilchengröße von etwa 0,4 mm bis 5 mm, insbesondere von etwa 0,4 mm bis 2,5 mm, und/oder das Reinigungsmaterial der Reinigungseinrichtung (B) (50) einen Teilchendurchmesser von etwa 0,25 mm bis 5 mm, insbesondere von etwa 0,5 bis 1,25 mm, aufweist.

10. Reinigungseinheit nach mindestens einem der vorhergehenden Ansprüche, **dadurch gekennzeichnet, dass** die Reinigungseinheit in ein zyklisches Reinigungssystem integriert ist, das einen ersten Wasserbehälter (5) aufweist, der durch eine Leitung (10) mit einem zweiten Wasserbehälter (20) fluidverbunden ist, wobei die Reinigungseinrichtung (A) dem zweiten Wasserbehälter (20) zur Reinigung des sich darin befindlichen Wassers zugeordnet ist.

11. Reinigungseinrichtung nach Anspruch 10, **dadurch gekennzeichnet, dass** der erste Wasserbehälter (5) das Wasserbecken eines Schwimmbads oder Gewerbebetriebs und der zweite Wasserbehälter (20) einen Wasserspeicher, insbesondere einen Schwallwasserspeicher, darstellt.

12. Reinigungseinheit nach Anspruch 10 oder 11, **dadurch gekennzeichnet, dass** die Reinigungseinheit (A) innerhalb des zweiten Wasserbehälters (20) am Boden und/oder an den Wänden angeordnet ist.

13. Reinigungseinheit nach mindestens einem der vorhergehenden Ansprüche, **dadurch gekennzeichnet, dass** der Reinigungseinrichtung (A) (35) eine Einrichtung (80) zur Erzeugung eines elektromagnetischen Feldes derart zugeordnet ist, dass unter Einwirkung eines elektrischen Magnetes auf den Reinigungsstoff der Reinigungseinrichtung (A) (35) dessen Adsorptionsleistung erhöht ist.

14. Reinigungseinrichtung nach mindestens einem der Ansprüche 10 bis 13, **dadurch gekennzeichnet, dass** eine zweite Desinfektionseinrichtung (60) zum Versetzen des Wassers des zweiten Wasserbehälters mit einem Desinfektionsmittel mit dem zweiten Wasserbehälter (20) durch eine Rohrleitung (85) derart verbunden ist, dass das Wasser des zweiten Wasserbehälters (20) durch die zweite Desinfektionseinrichtung (60) zirkulierbar ist.

15. Verwendung der Reinigungseinheit nach mindestens einem der vorhergehenden Ansprüche zur Aufbereitung von industriellen Brauch- und Abwässern, von Trinkwasser und von Schwimmbeckenwasser.

## Claims

1. A cleaning device for treating water, especially industrial service and waste water, drinking water and swimming pool water, the cleaning unit having at least two cleaning devices (A, B) (35, 50), which have a fluid connection to one another by means of a connecting line (40), a cleaning device (A) (35) containing a particulate adsorbent cleaning substance with a minimum BET surface of 100 m²/g, especially 300 m²/g, to remove organic substances, especially halogenated hydrocarbons and amines, and a further cleaning device (B) (50) containing a particulate cleaning material, which is chemically inert, especially with respect to disinfectants, to remove turbidity, **characterised in that**
the particles of the cleaning material of the cleaning device (B) (50) are spherical and have a smooth surface with a roughness (Ra) below 1 µm.

2. A cleaning unit according to claim 1, **characterised in that** 1.) arranged in the flow direction from the cleaning device (A) (35) to the cleaning device (B) (50) between the two cleaning devices (A, B) (35, 50) is a flocculation device (45) and/or arranged after the cleaning device (B) (50) is a disinfecting unit (55) or 2.) arranged in the flow direction from the cleaning device (B) (50) to the cleaning device (A) (35) before the cleaning device (B) (50) is a flocculation device (45') and/or arranged after the cleaning device (A) (35) is a disinfecting unit (55').

3. A cleaning unit according to claim 2, **characterised in that** a further disinfecting unit is arranged between the cleaning devices (A, B) (35, 50).

4. A cleaning unit according to any one of claims 1 to 3, **characterised in that** the cleaning substance of the cleaning device (A) (35) has a maximum BET surface of 1800 m²/g, especially of about 750 to 1200 m²/g.

5. A cleaning unit according to at least any one of the preceding claims, **characterised in that** the cleaning substance of the cleaning unit (A) (35) is abrasion-resistant, especially has an abrasion count according to the (AWWA) method of about 50 to 98 and/or a ball hardness to DIN(EN) 12915 of about 50 to 100%, especially of about 70 to 99%.

6. A cleaning unit according to at least any one of the preceding claims, **characterised in that** the cleaning substance of the cleaning device (A) (35) is contained in water-permeable containers, especially in pads and/or pouches.

7. A cleaning unit according to at least any one of the preceding claims, **characterised in that** the cleaning substance of the cleaning device (A) (35) comprises activated carbon.

8. A cleaning unit according to claim 1, **characterised in that** the particles are glass balls.

9. A cleaning unit according to at least any one of the preceding claims, **characterised in that** the cleaning substance of the cleaning device (A) (35) has a particle size of about 0.4 mm to 5 mm, especially of about 0.4 mm to 2.5 mm and/or the cleaning material of the cleaning device (B) (50) has a particle diameter of about 0.25 mm to 5 mm, especially of about 0.5 to 1.25 mm.

10. A cleaning unit according to at least any one of the preceding claims, **characterised in that** the cleaning unit is integrated in a cyclic cleaning system, which has a first water container (5), which has a fluid connection by a line (10) to a second water container (20), the cleaning device (A) being associated with the second water container (20) for cleaning the water located therein.

11. A cleaning device according to claim 10, **characterised in that** the first water container (5) is the water basin of a swimming pool or business establishment and the second water container (20) is a reservoir, especially a flood reservoir.

12. A cleaning unit according to claim 10 or 11, **characterised in that** the cleaning unit (A) is arranged within the second water container (20) on the base and/or on the walls.

13. A cleaning unit according to at least any one of the preceding claims, **characterised in that** a device (80) for producing an electromagnetic field is associated with the cleaning device (A) (35) in such a way that under the action of an electric magnet on the cleaning substance of the cleaning device (A) (35), its adsorption power is increased.

14. A cleaning device according to at least any one of claims 10 to 13, **characterised in that** a second disinfecting device (60) to add a disinfectant to the water of the second water container is connected to the second water container (20) by a pipeline (85) in such a way that the water of the second water container (20) can be circulated through the second disinfecting device (60).

15. Use of the cleaning unit according to at least any one preceding claims for treating industrial service and waste water, drinking water and swimming pool water.

## Revendications

1. Unité d'épuration pour le traitement de l'eau, en particulier d'eaux industrielles et d'eaux usées, d'eau potable et d'eau de piscine, ladite unité d'épuration comprenant au moins deux dispositifs de purification (A, B) (35, 50) en liaison fluidique entre eux au moyen d'une conduite de raccordement (40), un dispositif de purification (A) (35) contenant une substance de purification particulaire adsorbante ayant une surface BET minimale de 100 m²/g, en particulier de 300 m²/g, pour l'élimination de substances organiques, en particulier d'hydrocarbures halogénés et d'amines, et un autre dispositif de purification (B) (50) contenant une matière de purification particulaire, en particulier chimiquement inerte par rapport aux agents désinfectants, pour l'élimination de substances en suspension,
**caractérisée en ce que**
les particules de la matière de purification (B) (50) sont sphériques et présentent une surface lisse ayant une rugosité (Ra) inférieure à 1 µm.

2. Unité d'épuration selon la revendication 1, **caractérisée en ce que** 1.) un dispositif de floculation (45) est disposé entre les deux dispositifs de purification (A, B) (35, 50) dans le sens d'écoulement du dispositif de purification (A) (35) vers le dispositif de purification (B) (50), et/ou une unité de désinfection (55) est disposée en aval du dispositif de purification (B) (50), ou 2.) un dispositif de floculation (45') est disposé en amont du dispositif de purification (B) (50) dans le sens d'écoulement du dispositif de purification (B) (50) vers le dispositif de purification (A) (35) et/ou une unité de désinfection (55') est disposée en aval du dispositif de purification (A) (35).

3. Unité d'épuration selon la revendication 2, **caractérisée en ce qu'**une autre unité de désinfection est disposée entre les dispositifs de purification (A, B) (35, 50).

4. Unité d'épuration selon une des revendications 1 à 3, **caractérisée en ce que** la substance de purification du dispositif de purification (A) (35) a une surface BET maximale de 1800 m²/g, en particulier sensiblement comprise entre 750 et 1200 m²/g.

5. Unité d'épuration selon au moins une des revendications précédentes, **caractérisée en ce que** la substance de purification de l'unité d'épuration (A) (35) est résistante à l'abrasion, et présente en particulier un indice d'abrasion suivant le procédé (AWWA) sensiblement compris entre 50 et 98 et/ou une dureté à la bille suivant DIN (EN) 12915 sensiblement comprise entre 50 et 100 %, en particulier sensiblement comprise entre 70 et 99 %.

6. Unité d'épuration selon au moins une des revendications précédentes, **caractérisée en ce que** la substance de purification du dispositif de purification (A) (35) est contenue dans des récipients perméables à l'eau, en particulier dans des tampons et/ou des poches.

7. Unité d'épuration selon au moins une des revendications précédentes, **caractérisée en ce que** la substance de purification du dispositif de purification (A) (35) comprend du charbon actif.

8. Unité d'épuration selon la revendication 1, **caractérisée en ce que** les particules sont des billes de verre.

9. Unité d'épuration selon au moins une des revendications précédentes, **caractérisée en ce que** la substance de purification du dispositif de purification (A) (35) présente une grandeur de particule sensiblement comprise entre 0,4 mm et 5 mm, en particulier sensiblement comprise entre 0,4 mm et 2,5 mm, et/ou la matière de purification du dispositif de purification (B) (50) présente un diamètre de particule sensiblement compris entre 0,25 mm et 5 mm, en particulier sensiblement compris entre 0,5 et 1,25 mm.

10. Unité d'épuration selon au moins une des revendications précédentes, **caractérisée en ce que** l'unité d'épuration est intégrée à un système de purification cyclique comportant un premier réservoir d'eau (5) en liaison fluidique avec un deuxième réservoir d'eau (20) au moyen d'une conduite (10), le dispositif de purification (A) étant associé au deuxième réservoir d'eau (20) pour la purification de l'eau qui s'y trouve.

11. Unité d'épuration selon la revendication 10, **caractérisée en ce que** le premier réservoir d'eau (5) constitue le bassin d'eau d'une piscine ou d'une entreprise industrielle et le deuxième réservoir d'eau (20) une citerne à eau, en particulier une citerne tampon.

12. Unité d'épuration selon la revendication 10 ou 11, **caractérisée en ce que** l'unité d'épuration (A) est disposée sur le fond et/ou sur les parois à l'intérieur du deuxième réservoir d'eau (20).

13. Unité d'épuration selon au moins une des revendications précédentes, **caractérisée en ce qu'**un dispositif (80) de génération d'un champ magnétique est associé au dispositif de purification (A) (35), de manière à accroître la performance d'adsorption du dispositif de purification (A) (35) par l'action d'un électro-aimant sur la substance de purification de celui-ci.

14. Unité d'épuration selon au moins une des revendications 10 à 13, **caractérisée en ce qu'**un deuxième dispositif de désinfection (60) pour l'ajout d'un agent désinfectant à l'eau du deuxième réservoir d'eau est relié par une conduite (85) au deuxième réservoir d'eau (20), de manière à laisser circuler l'eau du deuxième réservoir d'eau (20) au travers du deuxième dispositif de désinfection (60).

15. Utilisation de l'unité d'épuration selon au moins une des revendications précédentes pour le traitement d'eaux industrielles et d'eaux usées, d'eau potable et d'eau de piscine.
